(19)

Europäisches
Patentamt

European
Patent Office

Office européen
des brevets

(11) **EP 4 661 100 A1**

(12) **EUROPEAN PATENT APPLICATION**
published in accordance with Art. 153(4) EPC

| | |
|---|---|
| (43) Date of publication:<br>**10.12.2025 Bulletin 2025/50** | (51) International Patent Classification (IPC):<br>*H01M 4/36* (2006.01)  *H01M 4/38* (2006.01)<br>*H01M 4/62* (2006.01)  *H01M 4/13* (2010.01)<br>*H01M 10/052* (2010.01) |
| (21) Application number: **24897852.0** | |
| (22) Date of filing: **02.10.2024** | (52) Cooperative Patent Classification (CPC):<br>**H01M 4/5815; H01M 4/133; H01M 4/136;**<br>**H01M 4/364; H01M 4/38; H01M 4/583;**<br>**H01M 4/625; H01M 4/661; H01M 4/667;**<br>**H01M 10/052;** H01M 2004/021; H01M 2004/027;<br>H01M 2004/028; Y02E 60/10 |
| | (86) International application number:<br>**PCT/KR2024/014979** |
| | (87) International publication number:<br>**WO 2025/116253 (05.06.2025 Gazette 2025/23)** |

| | |
|---|---|
| (84) Designated Contracting States:<br>**AL AT BE BG CH CY CZ DE DK EE ES FI FR GB**<br>**GR HR HU IE IS IT LI LT LU LV MC ME MK MT NL**<br>**NO PL PT RO RS SE SI SK SM TR**<br>Designated Extension States:<br>**BA**<br>Designated Validation States:<br>**GE KH MA MD TN**<br><br>(30) Priority: **27.11.2023  KR 20230167317**<br><br>(71) Applicant: **LG Energy Solution, Ltd.**<br>**Seoul 07335 (KR)** | (72) Inventors:<br>• **KIM, Min-Su**<br>  **Daejeon 34122 (KR)**<br>• **KIM, Bong-Soo**<br>  **Daejeon 34122 (KR)**<br><br>(74) Representative: **Goddar, Heinz J.**<br>**Boehmert & Boehmert**<br>**Anwaltspartnerschaft mbB**<br>**Pettenkoferstrasse 22**<br>**80336 München (DE)** |

(54) **ELECTRODE FOR LITHIUM SULFUR BATTERY AND HIGH ENERGY DENSITY LITHIUM SULFUR BATTERY COMPRISING SAME**

(57)    The present disclosure relates to an electrode that includes a current collector and an electrode active material layer located on at least one side of the current collector. The electrode active material layer includes a sulfur-carbon composite and a binder, and the sulfur-carbon composite includes a porous carbon material and a sulfur-based material. The current collector includes aluminum (Al), and has a thickness of about 9 μm or less.

[Fig 2]

EP 4 661 100 A1

## Description

TECHNICAL FIELD

The present disclosure relates to an electrode for a lithium sulfur battery and a lithium sulfur battery including the same.

This application is based on and claims priority from Korean Patent Application No. 10-2023-0167317, filed on November 27, 2023, with the Korean Intellectual Property Office, the disclosure of which is incorporated herein in its entirety by reference.

BACKGROUND

As the application range of lithium secondary batteries expands to not only portable electronic devices, but also electric vehicles (EVs) and energy storage systems (ESSs), the demand for high-capacity, high-energy density and long-lifespan lithium secondary batteries is increasing.

Among various lithium secondary batteries, a lithium sulfur battery is a battery system where a sulfur-based material containing sulfur-sulfur bonds is used as a positive electrode active material, and a lithium metal, a carbon-based material through which lithium ions are intercalated/deintercalated, or silicon or tin that forms an alloy with lithium, is used as a negative electrode active material.

Sulfur is a main material of the positive electrode active material in the lithium sulfur battery, and is advantageous in that it has low weight per atom, is easy to supply and inexpensive due to its abundant resources, is non-toxic, and is an environmentally friendly material.

SUMMARY

### Technical Problem

The present disclosure provides an electrode for implementing a lithium sulfur battery with high-energy density and a lithium sulfur battery including the same.

In one aspect, the present disclosure provides an electrode in which the weight of the electrode is reduced so that the portion of the active material to the total weight of the electrode may be increased, and the weight ratio of the current collector may be lowered.

In one aspect, the present disclosure provides an electrode in which the portion of the active material may be increased with respect to the total weight of the electrode even when the loading amount of the electrode is relatively low.

In one aspect, the present disclosure provides a lithium sulfur battery in which the portion of the active material to the total weight of the electrode is relatively high and thus a relatively high energy density is implemented.

### Technical Solution

According to one aspect of the present disclosure, an electrode of the following embodiments is provided.

An electrode according to a first embodiment includes: a current collector; and an electrode active material layer located on at least one side of the current collector. The electrode active material layer includes a sulfur-carbon composite and a binder. The sulfur-carbon composite includes a porous carbon material and a sulfur-based material. The current collector includes aluminum (Al), and has a thickness of about 9 $\mu$m or less.

According to a second embodiment, the electrode of the first embodiment satisfies a value based on the following equation 1 to be 90 cm$^2$/mAh or more.

[Equation 1]

$$\frac{(weight\ of\ electrode - weight\ of\ current\ collector\ )}{weight\ of\ current\ collector} \ X \ \frac{1}{loading\ amount\ of\ electrode}$$

In the above equation 1, the unit of weight of the electrode and the unit of weight of the current collector are grams (g), and the loading amount of the electrode is a loading amount of sulfur in the electrode, and its unit is mAh/cm$^2$.

According to a third embodiment, in the first embodiment or the second embodiment, the value based on the above equation 1 may satisfy 100 cm$^2$/mAh to 150 cm$^2$/mAh.

According to a fourth embodiment, in any one of the first to third embodiments, the thickness of the current collector may be about 5 $\mu$m to 9 $\mu$m.

According to a fifth embodiment, in any one of the first to fourth embodiments, the content of the sulfur-based material in the electrode active material layer may be about 65 wt% or more.

According to a sixth embodiment, in any one of the first to fifth embodiments, the loading amount of sulfur may be about 5 mAh/cm$^2$ or less.

According to a seventh embodiment, in any one of the first to sixth embodiments, the loading amount of sulfur may be about 3.5 mAh/cm$^2$ or less.

According to another aspect of the present disclosure, a lithium sulfur battery of the following embodiments is provided.

A lithium sulfur battery, according to an eighth embodiment, includes a positive electrode, a negative electrode, a separator interposed between the positive electrode and the negative electrode, and an electrolyte. At least one of the positive electrode and the negative electrode may be an electrode according to any one of the first to seventh embodiments.

According to a ninth embodiment, the weight ratio (El/S) of the electrolyte to sulfur in the eighth embodiment, may be about 3.5 g/g or less.

According to a tenth embodiment the energy density of the lithium sulfur battery in the eighth embodiment or the ninth embodiment, may be about 350 Wh/kg or more.

**Advantageous Effects**

According to one aspect of the present disclosure, there is an advantage in that the weight ratio of the active material is increased with respect to the total weight of the electrode.

Also, even in an electrode with a relatively low-loading amount of active material, the weight ratio of the active material to the total weight of the electrode may be increased, thereby exhibiting an advantage in that the energy density of a battery using the electrode is increased.

Also, according to one aspect of the present disclosure, the weight ratio of the current collector to the total weight of the electrode is relatively low, thereby exhibiting an advantage in that the high-energy density lithium sulfur battery is implemented.

BRIEF DESCRIPTION OF THE DRAWINGS

FIG. 1 is a graph illustrating the weight ratio of a current collector in a pouch-type battery according to the thickness of the current collector (Al foil) regarding Comparative Examples 1 to 6 and Examples 1 to 4.

FIG. 2 is a graph illustrating the relative energy density value of a battery according to the thickness of the current collector (Al foil) regarding Comparative Examples 1 to 6 and Examples 1 to 4.

DETAILED DESCRIPTION

Hereinafter, the present disclosure will be described with embodiments.

Terms or words used in the present specification and claims should not be construed as limited to ordinary, customary, or dictionary meanings, and should be interpreted as meanings and concepts consistent with the technical idea of the present disclosure on the basis of the principle that the inventor may appropriately define the concepts of the terms in order to explain his/her own invention in the best way.

Throughout the present specification, when it is said that a certain part "includes" or "has" a certain component, this means that the certain part may further include other components rather than excluding other components unless specifically stated to the contrary.

Also, the terms "about," "substantially" *etc.,* used throughout the present specification, are used to mean the corresponding numerical values or the approximations of the numerical values when inherent manufacturing and material tolerances are presented in the mentioned meaning, and are used to prevent infringers from unfairly using the disclosed contents in which precise or absolute figures are mentioned to aid the understanding of the present application.

Throughout the present specification, the description of "A and/or B" means "A or B or both".

In the present disclosure, the "specific surface area" is measured by a Brunauer-Emmett-Teller (BET) measurement method, and may be calculated from a nitrogen gas absorption amount by using, for example, BELSORP-mini II of BEL Japan under a liquid nitrogen temperature (77K).

The term "(poly) sulfide" used in the present specification is a concept including both "(poly)sulfide ion ($S_x^{2-}$, $1 \leq x \leq 8$)" and "lithium (poly)sulfide ($Li_2S_x$ or $LiS_x^{-}$, $1 \leq x \leq 8$)".

The term "polysulfide" used in the present specification is a concept including both "polysulfide ion ($S_x^{2-}$, $1 < x \leq$

8)" and "lithium polysulfide ($Li_2S_x$ or $LiS_x^-$, $1 < x \leq 8$)".

The term "composite" used in the present specification refers to a substance in which two or more materials are combined to form physically and chemically distinct phases and exhibit more effective functions.

The term "porosity" used in the present specification refers to the ratio of the volume occupied by pores to the total volume in a certain structure, uses vol% as its unit, and may be used interchangeably with terms such as a ratio of pores and a void ratio.

Unless otherwise specified in the present specification, the porosity may have a value obtained through the following relational expression by using the apparent density measured for the target material and the actual density. The actual density is calculated on the basis of the actual density and composition of components constituting the target material.

$$\text{Porosity (vol\%)} = \{1 - (\text{apparent density/actual density})\} \times 100$$

In the present disclosure, the "particle diameter $D_{10}$" means a particle size based on 10% of the volume cumulative particle size distribution of measurement target particles, the "particle diameter $D_{50}$" means a particle size based on 50% of the volume cumulative particle size distribution of measurement target particles, and the "particle diameter $D_{90}$" means a particle size based on 90% of the volume cumulative particle size distribution of measurement target particles.

Each of the particle diameters $D_{10}$, $D_{50}$ and $D_{90}$ may be measured by using a laser diffraction method. For example, for the measurement, measurement target particle powder is dispersed in a dispersion medium, and then is introduced into a commercially available laser diffraction particle size measurement device (*e.g.*, Microtrac MT 3000) and is irradiated with ultrasonic waves of about 28 kHz with an output of 60 W. Then, after a volume cumulative particle size distribution graph is obtained, respective particle sizes corresponding to 10%, 50%, and 90% in the volume cumulative distribution are obtained.

The present disclosure relates to an electrode for an electrochemical device, and an electrochemical device including the electrode, for example, a secondary battery. The secondary battery may be a lithium secondary battery. The electrode according to the present disclosure may be at least one of a positive electrode and a negative electrode, and may be a positive electrode including, for example, sulfur as an active material. Also, the electrode includes a sulfur-based material as an active material, and the lithium secondary battery including such an electrode may be a lithium-sulfur secondary battery (or a lithium sulfur battery).

The lithium-sulfur battery has a theoretical energy density of 2,600 Wh/kg when a theoretical specific capacity resulting from the conversion reaction ($S_8 + 16Li^+ + 16e^- \rightarrow 8Li_2S$) of lithium ions and sulfur at the positive electrode, is 1,675 mAh/g, and lithium metal is used as the negative electrode. This has a very high figure in the theoretical energy density compared to other battery systems currently being studied (Ni-MH battery: 450 Wh/kg, Li-FeS battery: 480 Wh/kg, Li-MnO$_2$ battery: 1,000 Wh/kg, Na-S battery: 800 Wh/kg) and lithium ion batteries (250 Wh/kg), and thus is attracting attention as a high-capacity, eco-friendly, and inexpensive lithium secondary battery among secondary batteries currently being developed.

However, there is a problem in that the theoretical capacity may not be fully implemented due to the large amount of electrolyte, decreased efficiency of the positive electrode and deterioration of the negative electrode. Thus, the energy density has not yet been sufficiently increased. Accordingly, research is continuing to implement a lithium-sulfur battery with high energy density.

In the lithium sulfur battery, since the density of the sulfur-carbon composite used for the positive electrode is low, when a current collector is coated with the sulfur-carbon composite, the density of the current collector becomes relatively high. Thus, the weight ratio of the current collector to the total weight of the electrode increases. Therefore, in actuality, the weight ratio of the current collector to the electrode is relatively high, making it difficult to implement a high-energy density battery (e.g., a pouch-type battery). Also, the ratio of the active material in the electrode decreases when a low-loading electrode is implemented by lowering a loading amount for various purposes, such as increasing the surface utilization rate of carbon in the positive electrode and thus increasing the electrochemical reaction rate. Similarly, it has been difficult to implement a battery with high-energy density.

According to one embodiment of the present disclosure, an electrode is provided in which the weight of the electrode is reduced so that the portion of the active material to the total weight of the electrode may be increased, and the weight ratio of the current collector may be lowered.

<Electrode>

The electrode according to one aspect of the present disclosure is an electrode that includes a current collector and an electrode active material layer located on at least one side of the current collector. The electrode active material layer includes a sulfur-carbon composite and a binder.

According to one aspect of the present disclosure, the sulfur-carbon composite includes a porous carbon material and a sulfur-based material.

According to one aspect of the present disclosure, the thickness of the current collector is about 9 $\mu$m or less.

Sulfur-Carbon Composite

According to one embodiment of the present disclosure, an electrode that may be used for a high-energy density electrochemical device is implemented in which the thickness of the current collector is relatively thin compared to a conventional electrode that uses, as an active material, a sulfur-carbon composite in which a sulfur-based material (as an active material) is supported on a porous carbon material and is complexed.

For example, in one embodiment of the present disclosure, the sulfur-carbon composite may include an active material for the positive electrode, and may be bound with the binder to form an electrode active material layer. The sulfur-carbon composite includes a porous carbon material and a sulfur-based material.

In one embodiment of the present disclosure, the sulfur-based material is included as an active material in an electrochemical device such as, for example, a secondary battery, a lithium secondary battery, a lithium sulfur battery, *etc.,* and any material may be used as the sulfur-based material without limitation as long as it is used as an active material in a lithium sulfur battery. For example, the sulfur-based material may be inorganic sulfur ($S_8$), lithium (poly)sulfide ($Li_2S_x$ or $LiS_x^-$, $1 \le x \le 8$), an organic sulfur compound, a carbon-sulfur polymer or a mixture of two or more types thereof. In one embodiment of the present disclosure, the organic sulfur compound may be, for example, 2,5-dimercapto-1,3,4-thiadiazole, 1,3,5-trithiocyanuic acid or a mixture thereof, but is not limited to these. In one embodiment of the present disclosure, the carbon-sulfur polymer may be an example by one having the chemical formula $(C_2S_x)_n$ (x=2.5 to 50, n$\ge$2), but the present disclosure is not limited thereto.

In one embodiment of the present disclosure, the porous carbon material may be any carbon material without limitation, as long as it has a porous structure for supporting the sulfur-based material and has electrical conductivity so as to improve the electrical conductivity of the electrode active material layer when the sulfur-based material having little or no electrical conductivity, is used for the electrode active material layer. For example, the porous carbon material may be carbon nanotubes, carbon black, graphite, activated carbon, graphene or a mixture of two or more types thereof, but the present disclosure is not limited thereto.

For example, the sulfur-carbon composite may have a structure in which the sulfur-based material is supported on the outer surface of the porous carbon material and/or on the inner surface of pores, but is not limited thereto.

In one embodiment of the present disclosure, in the sulfur-carbon composite, the sulfur-based material may be included by physical adsorption with the porous carbon material, or by chemical bonding such as covalent bonding or van der Waals forces between a sulfur element (S) and carbon in the porous carbon material. In particular, the sulfur-based material may be chemically bonded to the surface of the porous carbon material to form the composite.

In one embodiment of the present disclosure, the sulfur-carbon composite may be complexed through simple mixing of the sulfur-based material and the carbon material or may have a coating form or a support form of a core-shell structure. In the coating form of the core-shell structure, either the sulfur-based material or the carbon material is coated on another material. For example, the surface of the carbon material may be wrapped with sulfur or vice versa. Also, in the support form, the sulfur-based material may be filled in the interior of the carbon material, particularly in the interior pores. As for the form of the sulfur-carbon composite, any form may be used as long as it satisfies the above suggested content ratio of sulfur and carbon materials, and is not limited in the present disclosure.

In one embodiment of the present disclosure, in the sulfur-carbon composite, the content of the sulfur element (S) may be about 60 wt% or more, 70 wt% or more, or 75 wt% or more, and 99 wt% or less with respect to 100 wt% of the sulfur-carbon composite. For example, in the sulfur-carbon composite, the content of the sulfur element (S) may be about 60 wt% to 99 wt%, 70 wt% to 99 wt%, 60 wt% to 90 wt%, 75 wt% to 90 wt%, 70 wt% to 85 wt%, 70 wt% to 80 wt%, 75 wt% to 80 wt%, or 70 wt% to 75 wt% with respect to 100 wt% of the sulfur-carbon composite.

In the sulfur-carbon composite according to the present disclosure, the sulfur-based material is located on at least one of the outer surface of the porous carbon material and the inner surface of pores. Here, the sulfur-based material may be present in an area less than 100 % of the entire inner and outer surface of the porous carbon material, for example, in an area of about 1 % to 95 %, or about 60 % to 90 %. When the sulfur is present on the surface of the porous carbon material within the above range, the maximum effect may be exhibited in terms of the electron transfer area and electrolyte wettability. For example, the surface of the porous carbon material is thinly and evenly impregnated with the sulfur in the area of the above range, and thus the electron transfer contact area may be increased during charging/discharging processes. When the sulfur is located on 100% of the entire surface area of the porous carbon material, the porous carbon material is completely covered with sulfur, thereby reducing the electrolyte wettability and reducing the contact with the conductive material included in the electrode. Then, electrons may not be transferred, and are not able to participate in the reaction.

Next, an example of a method of producing the sulfur-carbon composite will be described. In the production method according to one embodiment of the present disclosure, the sulfur-carbon composite may be produced by a compounding method including the steps of (S1) mixing a porous carbon material and a sulfur-based material, and (S2) compounding the mixture.

In the step (S1), the mixing may be performed using a stirring device according to one embodiment, in order to increase the degree of mixing between the sulfur-based material and the porous carbon material. Here, the mixing time and speed may also be selectively adjusted according to the content and conditions of raw materials.

In the step (S2), the compounding method is not particularly limited in the present disclosure, and, for example, a method such as dry compounding or wet compounding such as spray coating may be used. For example, a method may be used in which the mixture of sulfur and carbon materials obtained after mixing is pulverized by ball milling and then is placed in an oven of about 120°C to 160°C for about 20 min to 1 hour (h) so that inner and outer surfaces of the carbon material may be evenly coated with the melted sulfur.

The sulfur-carbon composite produced by the above described production method has a structure with a high specific surface area, a large amount of supported sulfur and an improved sulfur utilization rate, so that not only the electrochemical reactivity of sulfur is improved, but also the accessibility and contactability of the electrolyte are improved. Thus, the capacity and life characteristics of the lithium-sulfur battery may be improved.

In one embodiment of the present disclosure, the sulfur-carbon composite may have a density of about 1.5 g/cm$^3$ or more. For example, the sulfur-carbon composite may have a density of about 1.5 g/cm$^3$ to 3.0 g/cm$^3$. Alternatively, the sulfur-carbon composite may have a density of about 1.8 g/cm$^3$ to 2.5 g/cm$^3$, about 1.8 g/cm$^3$ to 2.1 g/cm$^3$, or about 1.9 g/cm$^3$ to 2.1 g/cm$^3$, for example, about 2.0 g/cm$^3$.

Thickness of Electrode and Equation 1

In an electrode including a sulfur-based material as an active material, an electrode active material layer may be formed by using the sulfur-based material, a conductive material, a binder, *etc.* That is, an electrode having a high-density electrode active material layer may be implemented by including the sulfur-based material structurally independently from the conductive material. In the present disclosure, since a sulfur-based material is supported on a porous carbon material and such a sulfur-carbon composite is used as an active material, a low density may be implemented in the electrode active material layer compared to in the electrode including the sulfur-based material structurally independently from the conductive material.

Therefore, the present disclosure provides an electrode using the above described sulfur-carbon composite, in which in the electrode, an electrode active material layer is formed by binding the composite with a binder, and the weight ratio of a current collector is relatively reduced to increase the density of the electrode active material layer, for example, the density of the sulfur-carbon composite in the electrode.

To this end, the thickness of the current collector may be limited to about 9 μm or less, but the reason for limiting the thickness of the current collector in this way is not limited to this.

For example, in one embodiment of the present disclosure, the electrode active material layer may have a porosity of about 60 vol% to 85 vol%. For example, the porosity of the electrode active material layer may be about 60 vol% to 80 vol%, 65 vol% to 80 vol%, 70 vol% to 80 vol%, or 75 vol% to 80 vol, for example about 78 vol%.

In this specification, the term "porosity" refers to the ratio of the volume occupied by pores to the total volume in a certain structure, uses vol% as its unit, and may be used interchangeably with terms such as a ratio of pores and a void ratio. The porosity may be measured according to the method ISO 15901:2019 known in the art.

In one embodiment of the present disclosure, the porosity of the electrode active material layer may be measured by, for example, mercury intrusion porosimetry (Hg porosimeter), and may be measured by using, for example, a mercury porosimeter (Micromeritics AUTOPORE V). Also, the porosity of the positive electrode active material layer may also be measured by using a BET (Brunauer-Emmett-Teller) measurement method using an adsorption gas such as nitrogen, and may be measured by using, for example, an analysis device of the BELSORP series of BEL of Japan, *e.g.,* mini II, but the present disclosure is not limited thereto. The porosity measured by this method may mean the total volume of pores formed in the positive electrode active material layer. Also, the porosity may also be measured through calculation from the true density of materials constituting the positive electrode active material layer, the apparent density of the prepared positive electrode active material layer and the thickness of the positive electrode. For example, the porosity may be calculated as a value of [(true density-apparent density)/true density] X 100(%) of the positive electrode active material layer.

In the electrode according to one embodiment of the present disclosure, the value based on the following equation 1 may satisfy 90 cm$^2$/mAh or more.

[Equation 1]

$$\frac{(weight\ of\ electrode\ -\ weight\ of\ current\ collector\ )}{weight\ of\ current\ collector}\ X\ \frac{1}{loading\ amount\ of\ electrode}$$

In the above equation 1, the unit of weight of the electrode and the unit of weight of the current collector are grams (g), and the loading amount of the electrode is the loading amount of sulfur in the electrode and its unit is mAh/cm$^2$.

In one embodiment of the present disclosure, since the current collector does not affect the capacity expression of the electrode, as the weight ratio of the current collector decreases with respect to the total weight of the electrode, that is, the weight ratio of components (e.g., the electrode active material layer) excluding the current collector increases with respect to the total weight of the electrode, an advantageous effect may be exhibited in implementing a high energy density.

In one embodiment of the present disclosure, the 'loading amount of the electrode' is the amount of the active material per unit area of the electrode, and may be converted into, for example, the capacity value of the electrode per unit area of the electrode and may be expressed as a value of mAh/cm$^2$. Here, the higher the loading amount of the electrode, the more the content of the active material in the electrode. Accordingly, the total weight of the electrode may be increased. Thus, the weight increase caused by loading may be corrected through a division by the loading amount value of the electrode in the above equation 1.

Therefore, a higher value based on the above equation 1 may indicate an electrode suitable for use in an electrochemical device having a high-energy density.

For example, according to one embodiment of the present disclosure, an electrode may be provided in which the value based on the above equation 1 is about 90 cm$^2$/mAh or more. For example, an electrode may be provided in which the value based on the above equation 1 is about 90 cm$^2$/mAh to 200 cm$^2$/mAh, 90 cm$^2$/mAh to 180 cm$^2$/mAh, 90 cm$^2$/mAh to 160 cm$^2$/mAh or 90 cm$^2$/mAh to 150 cm$^2$/mAh. According to one embodiment, an electrode may be provided in which the value based on the above equation 1 is 95 cm$^2$/mAh to 150 cm$^2$/mAh, 100 cm$^2$/mAh to 145 cm$^2$/mAh or 105.5 cm$^2$/mAh to 142.5 cm$^2$/mAh. When the electrode has the above described value of the equation 1, an advantageous effect may be exhibited in implementing an electrode and an electrochemical device having a high-energy density, but the present disclosure is not limited thereto.

For the reasons described above, as the thickness of the current collector decreases, an advantageous effect may be exhibited in implementing the high energy of the electrode. According to one embodiment of the present disclosure, the thickness of the current collector may be, for example, about 9 $\mu$m or less, for example, about 1 $\mu$m to 9 $\mu$m, 2 $\mu$m to 9 $\mu$m, 3 $\mu$m to 8.5 $\mu$m, 4 $\mu$m to 8.5 $\mu$m, 5 $\mu$m to 8.5 $\mu$m, 5.5 $\mu$m to 8.5 $\mu$m, 6 $\mu$m to 8 $\mu$m, 5.5 $\mu$m to 7 $\mu$m or 5.5 $\mu$m to 6.5 $\mu$m. When the thickness of the current collector is within the above described range, the weight of the electrode is not significantly increased with respect to the capacity of the electrode. Thus, an advantageous effect in implementing high energy density may be exhibited, and an advantageous effect also may be exhibited in terms of preventing the problem of damage to the current collector, such as tear, but the present disclosure is not limited thereto.

In one embodiment of the present disclosure, the 'thickness' of the current collector may be a value measured through a known thickness value of the current collector to be used or a value measured using a known thickness measuring device. As for the thickness measuring device for the measurement, for example, a thickness measuring device of Mitutoyo Corporation may be used. Alternatively, the thickness of the current collector may be measured through an electron microscopic photograph on the cross-section of the electrode.

As described above, in one embodiment of the present disclosure, when the loading amount of the electrode is too high, a phenomenon may occur in which a significant effect is not exhibited in the energy density improvement of the battery even when the thickness of the current collector is within the above described range. To this end, in one embodiment of the present disclosure, when the loading amount of the electrode is equal to or less than a certain level, the current collector having the above described thickness may be used.

In one embodiment of the present disclosure, the loading amount of the electrode may be, for example, about 10 mAh/cm$^2$ or less. For example, the loading amount of the electrode may be about 0.5 mAh/cm$^2$ to 10 mAh/cm$^2$.

In another embodiment of the present disclosure, the loading amount of the electrode may be, for example, about 9 mAh/cm$^2$ or less, 8 mAh/cm$^2$ or less, 7 mAh/cm$^2$ or less, 6 mAh/cm$^2$ or less or 5 mAh/cm$^2$ or less. Alternatively, the loading amount of the electrode may be, for example, about 4.5 mAh/cm$^2$ or less, 4.0 mAh/cm$^2$ or less or 3.5 mAh/cm$^2$ or less.

In a further embodiment of the present disclosure, the loading amount of the electrode may be, for example, about 1 mAh/cm$^2$ to 5 mAh/cm$^2$, 1.5 mAh/cm$^2$ to 5 mAh/cm$^2$, 2 mAh/cm$^2$ to 5 mAh/cm$^2$, 2.1 mAh/cm$^2$ to 5 mAh/cm$^2$, 2.2 mAh/cm$^2$ to 5 mAh/cm$^2$, 2.3 mAh/cm$^2$ to 5 mAh/cm$^2$ or 2.3 mAh/cm$^2$ to 5.0 mAh/cm$^2$, 2.3 mAh/cm$^2$ to 4.5 mAh/cm$^2$, 2.3 mAh/cm$^2$ to 4.0 mAh/cm$^2$, or 2.3 mAh/cm$^2$ to 3.5 mAh/cm$^2$.

In one embodiment of the present disclosure, the 'loading amount of the electrode' indicates the loading amount of sulfur (S) in the electrode, and may be measured according to a known method for measuring the loading amount of sulfur in the electrode. For example, the loading amount of the electrode may be a value calculated from the total weight of sulfur (S) included as the electrode active material in the electrode. Here, the weight of sulfur in the electrode may also be measured from the amount of the electrode active material introduced during the manufacturing step, or may be measured through thermogravimetric analysis (TGA) on the electrode after the manufacturing. Meanwhile, in obtaining the electrode through disassembly from a manufactured lithium-sulfur battery, the electrode is obtained by disassembling the charged lithium-sulfur battery under an inert atmosphere, and then, the electrode is washed using an appropriate washing solvent and is dried. Next, through thermogravimetric analysis (TGA) of the result obtained by scraping the electrode active material layer, the content of sulfur (S) derived from the active material may be measured for the calculation, but the measurement method is not limited to this. Here, the loading amount of sulfur may be calculated by using the actually measured capacity (1,200 mAh/$g_s$) of sulfur from the above obtained weight of sulfur.

Electrode Active Material Layer

The electrode, according to one embodiment of the present disclosure, may contain a large amount of active material. The electrode may contain a large amount of active material so as to solve a problem in which the increase in energy density is not proportional to the increase in electrode density.

For example, in the electrode, the content of the sulfur-based material in the electrode active material layer may be about 65 wt% or more. For example, the content of the sulfur-based material in the electrode active material layer may be about 65 wt% to 99 wt%, 65 wt% to 95 wt%, 65 wt% to 90 wt%, 65 wt% to 85 wt%, 70 wt% to 85 wt%, 70 wt% to 80 wt%, 70 wt% to 75 wt%, 72.5 wt% to 75 wt% or 70 wt% to 72.5 wt%, but the present disclosure is not limited thereto. In the present disclosure, when the content of the sulfur-based material in the electrode active material layer is within the above described range, there may be an advantageous effect of increasing the capacity of the active material in the electrode while maintaining the content of the conductive carbon material and the content of the binder at a certain level, thereby realizing high electrical conductivity and/or excellent binding strength between active materials, but the present disclosure is not limited thereto.

In one embodiment of the present disclosure, the content of the sulfur-based material in the electrode active material layer may be calculated from the weight of the introduced sulfur-based material with respect to the total weight of the electrode materials added during the manufacturing step of the electrode active material layer. Alternatively, on the basis of the manufactured electrode, the content may be calculated from a value that is obtained by analyzing the content of the sulfur-based material in the total weight of the electrode active material layer, excluding the weight of the current collector in the electrode. Here, for the method of analyzing the content of the sulfur-based material in the electrode active material layer, refer to those described above in the measurement method of the loading amount.

Current Collector

According to one aspect of the present disclosure, the current collector includes aluminum (Al).

For example, in one embodiment of the present disclosure, the current collector is a current collector that may be used for a positive electrode, and may include aluminum.

In another embodiment of the present disclosure, the current collector may be made of only aluminum (Al).

In yet another embodiment of the present disclosure, the current collector may include aluminum, and may further include current collector components used for the positive electrode. For example, the current collector may include stainless steel, nickel, titanium, calcined carbon, silver or two or more types of these components together with aluminum.

In one embodiment of the present disclosure, when the current collector further includes a component other than aluminum, for example, it is possible to use aluminum whose surface is laminated with stainless steel, stainless steel whose surface is laminated with aluminum, or aluminum whose surface is treated with nickel, titanium, carbon, silver, or two or more types of these components.

In one embodiment of the present disclosure, in order to improve the binding force with the electrode active material layer formed on the surface of the current collector, it is possible to use the current collector having a surface on which fine irregularities are formed, but the present disclosure is not limited thereto.

In one embodiment of the present disclosure, the current collector may be used in various forms such as, for example, a film, a sheet, a foil, a net, a porous body, a foam, and a non-woven fabric, and as an example, the current collector may be an aluminum foil.

Hereinafter, other components of the electrode according to one aspect of the present disclosure will be described in detail.

In one embodiment of the present disclosure, the binder performs a role of improving the adhesion between particles of the active material and the adhesive strength between the active material and the current collector. Examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, and among these, one type may be used alone or a mixture of two or more types may be used. The binder resin may be included in an amount of about 1 wt% to 30 wt%, for example, 1 wt% to 20 wt%, or 1 wt% to 10 wt% with respect to the total weight of the positive electrode active material layer.

In one embodiment of the present disclosure, the electrode active material layer may further include other additives such as a conductive material in addition to the sulfur-carbon composite and the binder.

The conductive material is used to impart, for example, conductivity to the electrode, and may be used without particular limitation as long as it has electronic conductivity without causing a chemical change in the battery to be formed. Examples thereof may include graphite such as natural graphite or artificial graphite; carbon-based materials such as carbon black, acetylene black, Ketjen black, channel black, furnace black, lamp black, thermal black, carbon fiber, and carbon nanotubes; metal powder or metal fiber such as copper, nickel, aluminum, and silver; conductive whiskers such as zinc oxide and potassium titanate; conductive metal oxides such as titanium oxide; and conductive polymers such as polyphenylene derivatives, and among these, one type may be used alone or a mixture of two or more types may be used. When the conductive material is used, the conductive material may be generally included in an amount of about 1 wt% to 30 wt%, for example, 1 wt% to 20 wt%, or 1 wt% to 10 wt% with respect to the total weight of the positive electrode active material layer.

In one embodiment of the present disclosure, the electrode active material layer may further include other active materials in addition to the above described sulfur-carbon composite.

Here, other active materials that may be further included may not be particularly limited as long as they can be used as active materials in, for example, a lithium secondary battery. Examples of such active materials may include: lithium transition metal oxide; lithium metal iron phosphate; lithium nickel-manganese-cobalt oxide; an oxide obtained by substituting a part of lithium nickel-manganese-cobalt oxide with another transition metal; or two or more of these, but are not limited thereto. For example, examples of the positive electrode active material may include: layered compounds such as lithium cobalt oxide ($LiCoO_2$) and lithium nickel oxide ($LiNiO_2$) or compounds substituted with one or more transition metals; lithium manganese oxide of a chemical formula $Li_{1+x}Mn_{2-x}O_4$ (where x is 0 to 0.33) such as $LiMnO_3$, $LiMn_2O_3$, and $LiMnO_2$; lithium copper oxide ($Li_2CuO_2$); vanadium oxide such as $LiV_3O_8$, $LiV_3O_4$, $V_2O_5$, and $Cu_2V_2O_7$; Ni site-type lithium nickel oxide represented by a chemical formula $LiNi_{1-x}M_xO_2$ (where M = Co, Mn, Al, Cu, Fe, Mg, B or Ga, and x = 0.01 to 0.3); lithium manganese composite oxide represented by a chemical formula $LiMn_{2-x}M_xO_2$ (where M = Co, Ni, Fe, Cr, Zn or Ta, and x = 0.01 to 0.1) or $Li_2Mn_3MO_8$ (where M = Fe, Co, Ni, Cu or Zn); lithium metal phosphate $LiMPO_4$ (where M = Fe, CO, Ni, or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, and a+b+c=1); an oxide $Li_a[Ni_bCo_cMn_dAl_e]_{1-f}M1_fO_2$ in which a part of lithium nickel-manganese-cobalt oxide is substituted with aluminum (M1 is at least one type selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$); an oxide $Li_{1+x}(Ni_aCo_bMn_cM_d)_{1-x}O_2$ in which a part of a lithium nickel-manganese-cobalt oxide is substituted with another transition metal (x = 0 to 0.03, a = 0.3 to 0.95, b = 0.01 to 0.35, c = 0.01 to 0.5, d = 0.001 to 0.03, a+b+c+d=1, and M is any one selected from the group consisting of Fe, V, Cr, Ti, W, Ta, Mg and Mo); a disulfide compound; and $Fe_2(MoO_4)_3$, but are not limited thereto.

**<Lithium Sulfur Battery>**

A lithium sulfur battery according to another aspect of the present disclosure includes a positive electrode, a negative electrode, a separator interposed between the positive electrode and the negative electrode, and an electrolyte. At least one of the positive electrode and the negative electrode is the above described electrode.

In one embodiment of the present disclosure, the positive electrode of the lithium sulfur battery may be the above described electrode. For example, the positive electrode is an electrode that includes a current collector and an electrode active material layer located on at least one side of the current collector. The electrode active material layer includes a sulfur-carbon composite and a binder, and the sulfur-carbon composite includes a porous carbon material and a sulfur-based material. The current collector includes aluminum (Al), and may have a thickness of about 9 $\mu$m or less.

In one embodiment of the present disclosure, the unit structure of the positive electrode/the separator/the negative electrode may be referred to as an electrode assembly, and for the electrode assembly, for example, the negative electrode, the positive electrode, and the separator interposed between these electrodes may be stacked to form a stacked or stacked/folded structure or may be wound to form a jelly roll structure. Furthermore, when the jelly roll structure is formed, a separator may be additionally disposed on the outside so as to prevent the negative electrode and the positive electrode from coming in contact with each other.

In one embodiment of the present disclosure, the negative electrode will be described in detail when the positive electrode is the above described electrode.

The negative electrode may have a structure in which a negative electrode active material layer is formed on one surface or both surfaces of a long sheet-shaped negative electrode current collector. The negative electrode active material layer may include a negative electrode active material and a binder resin. Also, the negative electrode active material layer may further include a conductive material as necessary.

For example, the negative electrode may be manufactured by a method of applying a negative electrode slurry on one surface or both surfaces of a long sheet-shaped negative electrode current collector, removing the solvent of the negative electrode slurry through a drying process, and performing roll-pressing. The negative electrode slurry is prepared by dispersing the negative electrode active material, the conductive material, and the binder in a solvent such as dimethyl sulfoxide (DMSO), isopropyl alcohol, N-methylpyrrolidone (NMP), acetone, or water. Meanwhile, a negative electrode including an uncoated portion may be manufactured by a method in which during application of the negative electrode slurry, the negative electrode slurry is not applied to a part of the region of the negative electrode current collector, e.g., one end of the negative electrode current collector.

The negative electrode active material may include a material through which lithium ions (Li$^+$) can be reversibly intercalated or deintercalated, a material capable of reversibly forming a lithium-containing compound by reacting with lithium ions, a lithium metal or a lithium alloy. The material through which the lithium ions can be reversibly intercalated or deintercalated may be, for example, crystalline carbon, amorphous carbon or a mixture thereof, and examples thereof may include artificial graphite, natural graphite, graphitized carbon fiber, amorphous carbon, soft carbon, and hard carbon, but are not limited thereto.

The material capable of reversibly forming a lithium-containing compound by reacting lithium ions may be, for example, tin oxide, titanium nitrate or a silicon-based compound.

The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). For example, the negative electrode active material may be lithium metal, and may have a form of, for example, a lithium metal thin film or lithium metal powder.

The silicon-based compound may be Si, a Si-Me alloy (where Me is at least one type selected from the group consisting of Al, Sn, Mg, Cu, Fe, Pb, Zn, Mn, Cr, Ti, and Ni), SiO$_y$ (where 0<y<2), a Si-C composite or a combination thereof, and may be, for example, SiO$_y$ (where 0<y<2). Since the silicon-based compound has a high theoretical capacity, when the silicon-based compound is included as the negative electrode active material, the capacity characteristics may be improved.

As for the negative electrode current collector, for example, copper, stainless steel, aluminum, nickel, titanium, calcined carbon, copper or stainless steel whose surface is treated with carbon, nickel, titanium, silver, etc. an aluminum-cadmium alloy, etc. may be used. The negative electrode current collector may usually have a thickness of about 3 μm to 500 μm, and like in the positive electrode current collector, fine irregularities may be formed on the current collector surface to enhance the bonding strength of the negative electrode active material. For example, the negative electrode current collector may be used in various forms such as a film, a sheet, a foil, a net, a porous body, a foam, and a non-woven fabric.

The binder performs a role of improving the adhesion between particles of the negative electrode active material and the adhesive strength between the negative electrode active material and the negative electrode current collector. Examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluororubber, and various copolymers thereof, and among these, one type may be used alone or a mixture of two or more types may be used. The binder may be included in an amount of about 1 wt% to 30 wt%, for example, about 1 wt% to 20 wt%, or 1 wt% to 10 wt% with respect to the total weight of the negative electrode active material layer.

The conductive material which is included as necessary is used to impart conductivity to the negative electrode, and may be used without particular limitation as long as it has electronic conductivity without causing a chemical change in the battery to be formed. Examples thereof may include: graphite such as natural graphite or artificial graphite; carbon-based materials such as carbon black, acetylene black, Ketjen black, channel black, furnace black, lamp black, thermal black, carbon fiber, and carbon nanotubes; metal powder or metal fiber such as copper, nickel, aluminum, and silver; conductive whiskers such as zinc oxide and potassium titanate; conductive metal oxides such as titanium oxide; and conductive polymers such as polyphenylene derivatives, and among these, one type may be used alone or a mixture of two or more types may be used. When the conductive material is used, the conductive material may be generally included in an amount of about 1 wt% to 30 wt%, for example, about 1 wt% to 20 wt%, or 1 wt% to 10 wt% with respect to the total weight of the negative electrode active material layer.

The separator is arranged in the electrode assembly in such a way that it is interposed between the negative electrode and the positive electrode. The separator separates the negative electrode from the positive electrode and provides a movement passage for lithium ions, and may be used without particular limitation as long as it is generally used as a separator in a lithium secondary battery. For example, as for the separator, a porous polymer film, e.g., a porous polymer film made of a polyolefin-based polymer such as ethylene homopolymer, propylene homopolymer, ethylene/-

butene copolymer, ethylene/hexene copolymer and ethylene/methacrylate copolymer, or a laminated structure of two or more layers of these may be used. Also, a conventional porous non-woven fabric, for example, a non-woven fabric made of high melting point-glass fiber, polyethylene terephthalate fiber, *etc.,* may also be used. Also, a coated separator containing ceramic components or polymer materials may also be used so as to ensure heat resistance or mechanical strength.

In one embodiment of the present disclosure, the lithium sulfur battery may be provided in a form in which the electrode assembly having, for example, a constituent unit of the positive electrode, the negative electrode and the separator, is housed in a battery casing together with the electrolyte.

In one embodiment of the present disclosure, as for the battery casing, any suitable casing may be selected without particular limitation as long as it is a type commonly used in the present technical field such as, for example, a pouch type, a metal can type, a cylindrical type, a stack type, or a coin type.

In one embodiment of the present disclosure, the lithium-sulfur battery may be a pouch-type, coin-type or cylindrical battery, and may be, for example, a pouch-type battery, but the present disclosure is not limited thereto.

In one embodiment of the present disclosure, as for the electrolyte, for example, an organic liquid electrolyte, an inorganic liquid electrolyte, a solid polymer electrolyte, a gel-type polymer electrolyte, a solid inorganic electrolyte, a melted inorganic electrolyte, etc. may be used, and the type thereof is not particularly limited.

In one embodiment of the present disclosure, the electrolyte may include a lithium salt.

In another embodiment of the present disclosure, the electrolyte may include a lithium salt and a non-aqueous solvent.

In a further embodiment of the present disclosure, the electrolyte may include a lithium salt, a non-aqueous solvent and additives.

The lithium salt may be used without any particular limitation as long as it is a compound capable of providing lithium ions to be used in the lithium secondary battery. For example, as for the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, etc. may be used. It is desirable to use the concentration of the lithium salt within a range of about 0.1 M to 5.0 M, for example, about 0.1 M to 3.0 M. When the concentration of the lithium salt falls within the above range, since the electrolyte has appropriate conductivity and viscosity, excellent electrolyte performance may be exhibited, and lithium ions may be effectively moved.

In one embodiment of the present disclosure, the lithium salt may contain LiTFSI.

The non-aqueous solvent may be used without any particular limitation as long as it can serve as a medium through which ions involved in the electrochemical reaction of the battery are movable. For example, as for the non-aqueous solvent, it is possible to use ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), ethylmethylcarbonate (EMC), ethylene carbonate (EC), and propylene carbonate (PC); alcohol-based solvents such as ethyl alcohol, and isopropyl alcohol; nitriles such as R-CN (R is a C2 to C20 linear, branched or cyclic hydrocarbon group, and may include a double bond, an aromatic ring or an ether bond); amides such as dimethylformamide; dioxolanes such as 1,3-dioxolane; or sulfolanes.

Meanwhile, in one embodiment of the present disclosure, the electrolyte may include a heterocyclic compound containing an oxygen atom or a sulfur atom in terms of forming a polymer protective film capable of suppressing the generation of lithium dendrites, and decreasing electrolyte decomposition and side reactions on the surface of lithium-based metal. The heterocyclic compound may be a 3- to 15-membered heterocyclic compound, for example, a 3- to 7-membered or 5- to 6-membered heterocyclic compound. The heterocyclic compound may be a heterocyclic compound substituted or unsubstituted with at least one type selected from the group consisting of an alkyl group having 1 to 4 carbon atoms, a cyclic alkyl group having 3 to 8 carbon atoms, an aryl group having 6 to 10 carbon atoms, a halogen group, a nitro group ($-NO_2$), an amine group ($-NH_2$) and a sulfonyl group ($-SO_2$); or a polycyclic compound of at least one type selected from the group consisting of cyclic alkyl group having 3 to 8 carbon atoms and an aryl group having 6 to 10 carbon atoms, and a heterocyclic compound. When the heterocyclic compound is a heterocyclic compound substituted with an alkyl group having 1 to 4 carbon atoms, radicals may be stabilized and side reactions between the additives and the electrolyte may be suppressed. Also, in the case of a heterocyclic compound substituted with a halogen group or a nitro group, a functional protective film may be formed on the lithium-based metal surface. The functional protective film is a stable and compact-type protective film, which enables uniform deposition of the lithium-based metal, and suppresses side reactions between polysulfide and lithium-based metal.

The heterocyclic compound may include, for example, at least one type selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene and 2,5-dimethylthiophene, and may include, for example, at least one type selected from the group consisting of 2-methylfuran and 2-methylthiophene.

Meanwhile, in one embodiment of the present disclosure, as for the non-aqueous solvent of the electrolyte, an ether-based solvent may be included in terms of improving the charging/discharging performance of the battery. Such an ether-based solvent includes cyclic ether (e.g., 1,3-dioxolane, tetrahydrofuran, tetrohydropyran, etc.), a linear ether compound (e.g., 1,2 dimethoxyethane, etc.), and low-viscosity fluorinated ether (e.g., 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, and 1H,1H,2'H-perfluorodipropyl ether), and a mixture of one or more types of these may be included as a non-aqueous solvent.

In one embodiment of the present disclosure, the non-aqueous solvent may include a mixture of 2-methyl furan and dimethoxyethane.

In one embodiment of the present disclosure, the non-aqueous solvent may include a mixture of 2-methyl furan and dimethoxyethane at a volume ratio of about 5:1 (v/v) to 1:5 (v/v), for example, about 1:1 (v/v) to 1:5 (v/v).

In one embodiment of the present disclosure, the additive may be used without particular limitation as long as it is an additive that can be used in the lithium sulfur battery for the purpose of improving the life characteristics of the battery, suppressing the decrease in battery capacity, and improving the discharge capacity of the battery. The additive may be included in an amount of about 0.1 wt% to 10 wt%, for example, 0.1 wt% to 5 wt% with respect to the total weight of the electrolyte.

In one embodiment of the present disclosure, the additive may include, for example, a nitrogen compound, for example, $LiNO_3$.

Meanwhile, in one embodiment of the present disclosure, in the lithium-sulfur battery of the present disclosure, the ratio (El/S) of the total weight of the electrolyte to the total weight of the sulfur element (S) in the positive electrode may be, for example, 3.5 g/g or less, for example, 3.3 g/g or less or 3.2 g/g or less. Also, in the lithium-sulfur battery, the ratio (El/S) of the total weight of the electrolyte to the total weight of the sulfur element (S) in the positive electrode may be about 2.0 g/g to 3.5 g/g, for example, 2.0 g/g to 3.0 g/g or 2.5 g/g to 3.0 g/g. When the sulfur-carbon composite according to the present disclosure is used, it is also possible to implement a lithium-sulfur battery having an El/S ratio falling within the above described range, and thus the effect of improving the energy density may be exhibited. Meanwhile, as for the lithium-sulfur battery using the sulfur-carbon composite, it is also possible to implement a battery having an El/S ratio higher than the above described range, but the present disclosure is not limited thereto.

In one embodiment of the present disclosure, the El/S ratio may be calculated by measuring the weight of sulfur from the sulfur-based material introduced for the positive electrode, and measuring the weight of the injected electrolyte, during the manufacturing step of the lithium sulfur battery.

In one embodiment of the present disclosure, the El/S ratio may be measured on the basis of the lithium sulfur battery as a manufactured finished product. The weight of sulfur in the positive electrode is measured according to the above described method of measuring the loading amount of sulfur in the positive electrode. Then, at a charged state, for example, SOC (State of Charge) 100%, after the battery is disassembled and the electrolyte is extracted from the positive electrode, the negative electrode, the separator and the casing, the weights of all remaining components are measured. Next, a value is obtained by subtracting the weights of components remaining after the extraction, from the weight of the finished lithium sulfur battery product, and then is taken as the weight of the electrolyte.

In one embodiment of the present disclosure, the lithium sulfur battery may be a battery having a high-energy density, and may be a battery having an energy density of, for example, 350 Wh/kg or more.

For example, the energy density of the lithium sulfur battery may be about 350 Wh/kg to 450 Wh/kg, but is not limited thereto.

In one embodiment of the present disclosure, the energy density of the lithium sulfur battery may be calculated according to the following equation after the discharge capacity is measured by performing discharging to 1.8 V at a rate of 0.5 C in a CC (Constant Current) mode at 25 °C and charging to 2.5 V with a constant current of 0.2 C.

$$\text{Energy density} = [(\text{Discharge capacity X Driving voltage})]/(\text{Cell weight})$$

Also, according to a further aspect of the present disclosure, a battery module including the lithium-sulfur battery as a unit battery is provided.

The battery module may be used as a power source for medium to large-sized devices that require, for example, high temperature stability, long cycle characteristics and high capacity characteristics.

Examples of the medium to large-sized devices may include a power tool powered and driven by an electric motor; electric cars including electric vehicles (EVs), hybrid electric vehicle (HEVs), plug-in hybrid electric vehicles (PHEVs), *etc.;* electric two-wheeled vehicles including an electric bicycle (E-bike), and an electric scooter (Escooter); an electric golf cart; and a power storage system, but are not limited thereto.

Hereinafter, the present disclosure will be described in detail with reference to Examples, drawings, etc.

**[Manufacturing of Lithium Sulfur Battery]**

Manufacturing of Positive Electrode

An aluminum thin film (Al foil) was prepared as a current collector, and an electrode slurry was applied on one surface of the prepared current collector, and dried to manufacture an electrode for a positive electrode. The electrode slurry was prepared by mixing 96 wt% of sulfur-carbon composite ($S_8$:CNT = 75:25) and 4 wt% of poly(acrylic acid) (PAA).

In the following Tables 1 and 2, the thickness of the current collector used for manufacturing the electrode, the loading amount of sulfur ($S_8$) in the electrode, and the value based on the following equation 1 are described.

$$[Equation\ 1]$$

$$\frac{(weight\ of\ electrode\ -\ weight\ of\ current\ collector\ )}{weight\ of\ current\ collector}\ X\ \frac{1}{loading\ amount\ of\ electrode}$$

In the above Equation 1, the unit of weight of the electrode and the unit of weight of the current collector are grams (g), and the loading amount of the electrode is the loading amount of sulfur in the electrode and its unit is mAh/cm$^2$.

Manufacturing of Lithium Sulfur Battery

The above manufactured electrode was used as a positive electrode, and a lithium metal having a thickness of 60 $\mu$m was prepared as a negative electrode.

The positive electrode and the negative electrode were positioned to face each other, and a polyethylene separator (Celgard, PE12) with a thickness of 12 $\mu$m was interposed between the electrodes so as to prepare an electrode assembly.

The prepared electrode assembly was accommodated in a pouch type casing, and an electrolyte was injected at an El/S ratio of 2.5 g/g to manufacture a lithium sulfur battery. The electrolyte was obtained by dissolving 0.75 M of lithium salt (LiTFSI) and 3 wt% of lithium nitrate ($LiNO_3$) in an organic solvent, and the organic solvent was obtained by mixing 2-methyl furan (2-MeF) and dimethoxyethane (DME) at a volume ratio of 3:7.

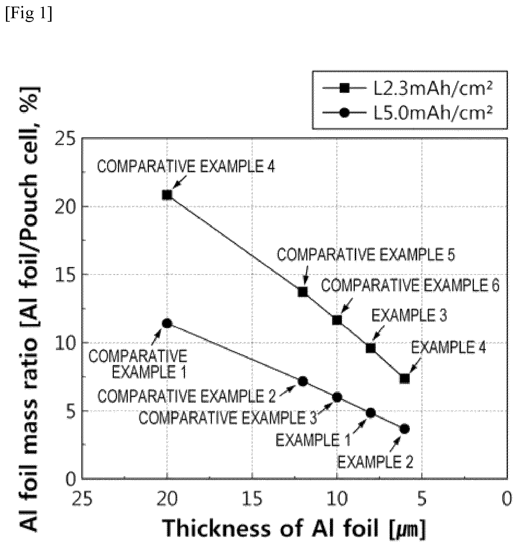

In the following Tables 1 and 2, and FIG. 1, the weight ratio of the positive electrode current collector (Al foil) in the manufactured pouch type battery is described.

**[Performance Evaluation of Lithium Sulfur Battery]**

Energy Density

Each of the above manufactured lithium sulfur batteries was discharged to 1.8 V in a constant current (CC) mode at a rate of 0.5 C at room temperature (25 °C), and then was charged to 2.5 V with a constant current (CC) at a rate of 0.3 C. Then, the discharge capacity (mAh/g (weight of sulfur)) per weight of sulfur was measured.

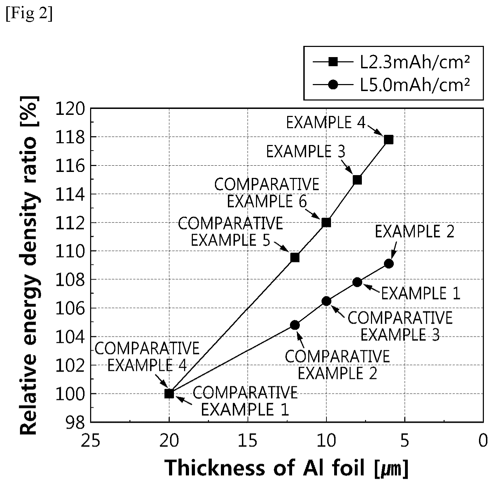

Meanwhile, from the measured discharge capacity, the energy density was measured in accordance with the following equation 2. Then, when Comparative Example 1 (Table 1) and Comparative Example 4 (Table 2) for respective loading amounts, each using a current collector with a thickness of 20 $\mu$m, are used as a reference, the relative energy density values are described in the following Tables 1 and 2 and FIG. 2.

Energy density (Wh/kg) = {[(Discharge capacity (mAh/g) X driving voltage (V))/1000]/(Cell weight (kg))}    [Equation 2]

[Table 1]

| | Content (%) of sulfur ($S_8$) in sulfur-carbon composite | Current collector thickness ($\mu$m) | Loading (mAh/cm$^2$) | Value of Equation 1 | Weight ratio (%) of Al foil in battery | Energy density (relative value, %) |
|---|---|---|---|---|---|---|
| Comparative Example 1 | 75 | 20 | 5.0 | 42.20 | 11.38 | 100.0 |
| Comparative Example 2 | 75 | 12 | 5.0 | 70.34 | 7.18 | 104.8 |
| Comparative Example 3 | 75 | 10 | 5.0 | 84.40 | 6.05 | 106.5 |

(continued)

|  | Content (%) of sulfur ($S_8$) in sulfur-carbon composite | Current collector thickness ($\mu$m) | Loading (mAh/cm$^2$) | Value of Equation 1 | Weight ratio (%) of Al foil in battery | Energy density (relative value, %) |
|---|---|---|---|---|---|---|
| Example 1 | 75 | 8 | 5.0 | 105.5 | 4.90 | 107.8 |
| Example 2 | 75 | 6 | 5.0 | 140.7 | 3.72 | 109.1 |

[Table 2]

|  | Content (%) of sulfur ($S_8$) in sulfur-carbon composite | Current collector thickness ($\mu$m) | Loading (mAh/cm$^2$) | Value of equation 1 | Weight ratio (%) of Al foil in battery | Energy density (relative value, %) |
|---|---|---|---|---|---|---|
| Comparative Example 4 | 75 | 20 | 2.3 | 42.75 | 20.86 | 100.0 |
| Comparative Example 5 | 75 | 12 | 2.3 | 71.25 | 13.70 | 109.5 |
| Comparative Example 6 | 75 | 10 | 2.3 | 85.51 | 11.69 | 112.1 |
| Example 3 | 75 | 8 | 2.3 | 106.9 | 9.59 | 115.0 |
| Example 4 | 75 | 6 | 2.3 | 142.5 | 7.37 | 117.8 |

The case of Table 1 is a case of a relatively high-loading electrode, in which the loading amount of the electrode is 5.0 mAh/cm$^2$ in Comparative Examples 1, 2, and 3 and Examples 1, and 2, and the case of Table 2 is a case of a relatively low-loading electrode, in which the loading amount of the electrode is 2.3 mAh/cm$^2$ in Comparative Examples 4, 5, and 6 and Examples 3 and 4.

Referring to FIG. 1, it can be confirmed that in the case of the high-loading electrode (the loading amount 5.0 mAh/cm$^2$)(Comparative Examples 1, 2, and 3 and Examples 1, and 2), the mass ratio of the aluminum thin film is relatively high compared to the case of low-loading electrode (the loading amount 2.3 mAh/cm$^2$)(Comparative Examples 4, 5, and 6 and Examples 3, and 4). This indicates that the smaller the loading amount, the greater the change in the current collector weight ratio. Also, it can be confirmed that as the thickness of the aluminum thin film decreases, the mass ratio of the aluminum thin film naturally decreases.

Referring to FIG. 2, it can be confirmed that in the case where the loading amount is small (the loading amount 2.3 mAh/cm$^2$)(Comparative Examples 4, 5, and 6 and Examples 3, and 4), the portion of aluminum in the electrode becomes relatively large, and thus as the thickness of the aluminum thin film decreases, the slope of the increase in energy density steeply increases compared to in the high-loading electrode (the loading amount 5.0 mAh/cm$^2$)(Comparative Examples 1, 2, and 3 and Examples 1, and 2).

**[Evaluation Result]**

From the results in the above Tables 1 and 2, it was found that when an electrode using the aluminum thin film current collector having a thickness of 9 $\mu$m or less is used, the energy density of the lithium sulfur battery may be greatly improved compared to when the thickness is greater than 9 $\mu$m. For example, as in Table 1, in the case of the high-loading electrode (the loading amount 5.0 mAh/cm$^2$), it was confirmed that when the aluminum thin film current collector has a thickness of 8 $\mu$m in Example 2 the energy density was increased by about 10% (to be precise, about 9.1%) compared to when the aluminum thin film current collector has a thickness of 20 $\mu$m in Comparative Example 1. Meanwhile, it can be found that the values of Equation 1 in Examples 1, and 2 are 105.5 cm$^2$/mAh and 140.7 cm$^2$/mAh, respectively, and are equal to or greater than 90 cm$^2$/mAh.

Meanwhile, as in Table 2, in the case of the electrode having a low loading amount (the loading amount 2.3 mAh/cm$^2$), when the aluminum thin film current collector has a thickness of 6 $\mu$m in Example 4, the relative value of the energy density was increased by about 17.8% compared to when the aluminum thin film current collector has a thickness of 20 $\mu$m in Comparative Example 4. It was confirmed that the increase in energy density almost doubled compared to in the electrode having a relatively high loading amount. Meanwhile, it can be found that the values of Equation 1 in Examples 3, and 4 are 106.9 cm$^2$/mAh and 142.5 cm$^2$/mAh, respectively, and are equal to or greater than 90 cm$^2$/mAh.

Meanwhile, in the above Comparative Examples and Examples, when an aluminum thin film was used as a current collector, the parameter of about 9 $\mu$m or less was calculated on the basis of the thickness thereof, but is not limited thereto. In the present disclosure, for example, parameters may also be calculated on the basis of the types of the used current collector metals, and weights and densities of these metals. For example, when Al, Ni, Cu, or Sus is used as a current collector, a condition in which the weight value (mg/cm$^2$) per unit area of the corresponding metal is equal to or less than a specific value may be selected on the basis of the density (d)(g/cm$^3$) and the weight value of the metal. For example, according to one embodiment, when the weight value per unit area (mg/cm$^2$) of the current collector is equal to or less than "0.9 x d", the energy density of the sulfur battery may be improved as in the case where the thickness of the aluminum thin film current collector is 9 μm or less. In this case, the densities of Al, Ni, Cu, and Sus are 2.7 g/cm$^3$, 8.91 g/cm$^3$, 8.96 g/cm$^3$ and 7.93 g/cm$^3$, respectively. Then, in a case where the relational expression of "0.9 xd" is applied, a condition corresponding to the above described condition that the thickness of the aluminum thin film current collector is 9 μm or less is achieved when the weight per unit area of the current collector is 2.43 mg/cm$^2$ or less in an Al current collector, when the weight per unit area of the current collector is 8.019 mg/cm$^2$ or less in an Ni current collector, when the weight per unit area of the current collector is 8.064 mg/cm$^2$ or less in a Cu current collector, and when the weight per unit area of the current collector is 7.137 mg/cm$^2$ or less in a Sus current collector.

Although descriptions have been made with reference to embodiments of the present disclosure, a person skilled in the relevant technical field or a person with ordinary skill in the relevant technical field would understand that various modifications and changes may be made to the present disclosure within a scope not departing from the spirit and technical area of the present disclosure described in the patent claims to be described later. Therefore, the technical scope of the present disclosure is not limited to the contents described in the detailed description of the specification, but should be determined by the patent claims.

**Claims**

1. An electrode comprising:

   a current collector; and
   an electrode active material layer located on at least one side of the current collector,
   wherein the electrode active material layer includes a sulfur-carbon composite and a binder,
   the sulfur-carbon composite includes a porous carbon material and a sulfur-based material, and
   the current collector includes aluminum (Al), and has a thickness of about 9 μm or less.

2. The electrode according to claim 1, wherein a value based on a following Equation 1 satisfies about 90 cm$^2$/mAh or more:

$$[\text{Equation 1}]$$
$$\frac{(weight\ of\ electrode - weight\ of\ current\ collector)}{weight\ of\ current\ collector} \ X \ \frac{1}{loading\ amount\ of\ electrode}$$

   wherein,

   a unit of weight of the electrode and a unit of weight of the current collector are grams (g), and
   a loading amount of the electrode is a loading amount of sulfur in the electrode, and its unit is mAh/cm$^2$.

3. The electrode according to claim 2, wherein the value based on the Equation 1 satisfies about 100 cm$^2$/mAh to 150 cm$^2$/mAh.

4. The electrode according to claim 1, wherein the thickness of the current collector is about 5 μm to 9 μm.

5. The electrode according to claim 1, wherein a content of the sulfur-based material in the electrode active material layer is about 65 wt% or more.

6. The electrode according to claim 1, wherein a loading amount of sulfur is about 5 mAh/cm$^2$ or less.

7. The electrode according to claim 1, wherein a loading amount of sulfur is about 3.5 mAh/cm$^2$ or less.

8. The electrode according to claim 1, wherein the current collector is made of only aluminum (Al).

9. The electrode according to claim 1, wherein the current collector includes stainless steel, nickel, titanium, calcined carbon, silver, or two or more types of these components, together with aluminum.

10. The electrode according to claim 1, wherein the current collector has any one of forms of a film, a sheet, a foil, a net, a porous body, a foam, and a non-woven fabric.

11. An electrode comprising:

a current collector; and
an electrode active material layer located on at least one side of the current collector,
wherein the electrode active material layer includes a sulfur-carbon composite and a binder,
the sulfur-carbon composite includes a porous carbon material and a sulfur-based material, and
the current collector includes a specific metal, and a weight value per unit area (mg/cm$^2$) of the specific metal satisfies a value of "0.9 x density (d)" or less.

12. The electrode according to claim 11, wherein the specific metal includes any one of aluminum (Al), nickel (Ni), copper (Cu) and stainless steel (Sus).

13. The electrode according to claim 11, wherein the current collector has any one of forms of a film, a sheet, a foil, a net, a porous body, a foam, and a non-woven fabric.

14. A lithium sulfur battery comprising:

a positive electrode, a negative electrode, a separator interposed between the positive electrode and the negative electrode, and an electrolyte,
wherein at least one of the positive electrode and the negative electrode includes a current collector and an electrode active material layer located on at least one side of the current collector,
the electrode active material layer includes a sulfur-carbon composite and a binder,
the sulfur-carbon composite includes a porous carbon material and a sulfur-based material, and
the current collector includes aluminum (Al), and has a thickness of about 9 $\mu$m or less.

15. The lithium sulfur battery according to claim 14, wherein a weight ratio (El/S) of the electrolyte to sulfur is about 3.5 g/g or less.

16. The lithium sulfur battery according to claim 14, wherein an energy density of the lithium sulfur battery is about 350 Wh/kg or more.

[Fig 1]

[Fig 2]

## INTERNATIONAL SEARCH REPORT

| | |
|---|---|
| International application No. |
| **PCT/KR2024/014979** |

**A. CLASSIFICATION OF SUBJECT MATTER**

**H01M 4/36**(2006.01)i; **H01M 4/38**(2006.01)i; **H01M 4/62**(2006.01)i; **H01M 4/13**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/36(2006.01); H01M 10/04(2006.01); H01M 10/052(2010.01); H01M 10/0569(2010.01); H01M 4/13(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬-황 전지(lithium-sulfur battery), 전극(electrode), 집전체(current collector), 다공성 탄소(porous carbon), 두께(thickness), 무게(weight), 알루미늄(aluminium, Al)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0110264 A (LG CHEM, LTD.) 11 October 2017 (2017-10-11) See claims 1 and 11; and paragraphs [0031]-[0039], [0064]-[0067], [0069], [0070], [0074]-[0080], [0104] and [0105]. | 1-5,8-14 |
| Y | | 6,7,15,16 |
| Y | KR 10-2023-0075579 A (LG ENERGY SOLUTION, LTD.) 31 May 2023 (2023-05-31) See claims 1-3; and paragraphs [0021]-[0027]. | 6,7,15,16 |
| A | KR 10-2019-0060262 A (LG CHEM, LTD.) 03 June 2019 (2019-06-03) See claim 4; and paragraphs [0029], [0095], [0097] and [0113]. | 1-16 |
| A | CN 111180736 A (NINGDE CONTEMPORARY AMPEREX TECHNOLOGY CO., LTD.) 19 May 2020 (2020-05-19) See claim 9; paragraph [0052]; and the examples. | 1-16 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 January 2025** | **14 January 2025** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/014979**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0154023 A (LG ENERGY SOLUTION, LTD.) 20 December 2021 (2021-12-20)<br>See abstract; and claims 1-12. | 1-16 |

Form PCT/ISA/210 (second sheet) (July 2022)

**INTERNATIONAL SEARCH REPORT**
Information on patent family members

International application No.

**PCT/KR2024/014979**

| Patent document cited in search report | | | Publication date (day/month/year) | Patent family member(s) | | | Publication date (day/month/year) |
|---|---|---|---|---|---|---|---|
| KR | 10-2017-0110264 | A | 11 October 2017 | KR | 10-1964280 | B1 | 01 April 2019 |
| KR | 10-2023-0075579 | A | 31 May 2023 | CN | 116848685 | A | 03 October 2023 |
| | | | | EP | 4273985 | A1 | 08 November 2023 |
| | | | | JP | 2024-509235 | A | 29 February 2024 |
| | | | | US | 2024-0120479 | A1 | 11 April 2024 |
| | | | | WO | 2023-096182 | A1 | 01 June 2023 |
| KR | 10-2019-0060262 | A | 03 June 2019 | CN | 111066181 | A | 24 April 2020 |
| | | | | CN | 111066181 | B | 19 July 2022 |
| | | | | EP | 3667779 | A2 | 17 June 2020 |
| | | | | EP | 3667779 | A4 | 28 October 2020 |
| | | | | EP | 3667779 | B1 | 14 February 2024 |
| | | | | ES | 2973435 | T3 | 20 June 2024 |
| | | | | HU | E065637 | T2 | 28 June 2024 |
| | | | | JP | 2020-536360 | A | 10 December 2020 |
| | | | | JP | 7062166 | B2 | 06 May 2022 |
| | | | | KR | 10-2229453 | B1 | 17 March 2021 |
| | | | | US | 11695111 | B2 | 04 July 2023 |
| | | | | US | 2020-0220169 | A1 | 09 July 2020 |
| | | | | WO | 2019-103326 | A2 | 31 May 2019 |
| | | | | WO | 2019-103326 | A3 | 18 July 2019 |
| CN | 111180736 | A | 19 May 2020 | CN | 111180736 | B | 08 June 2021 |
| | | | | CN | 113363500 | A | 07 September 2021 |
| | | | | CN | 113363500 | B | 30 April 2024 |
| | | | | EP | 3951959 | A1 | 09 February 2022 |
| | | | | EP | 3951959 | A4 | 08 June 2022 |
| | | | | EP | 3951959 | B1 | 11 September 2024 |
| | | | | EP | 3951959 | B8 | 16 October 2024 |
| | | | | EP | 3951959 | C0 | 11 September 2024 |
| | | | | JP | 2022-526744 | A | 26 May 2022 |
| | | | | JP | 7344309 | B2 | 13 September 2023 |
| | | | | US | 2022-0085379 | A1 | 17 March 2022 |
| | | | | WO | 2020-238156 | A1 | 03 December 2020 |
| KR | 10-2021-0154023 | A | 20 December 2021 | None | | | |

Form PCT/ISA/210 (patent family annex) (July 2022)

**EP 4 661 100 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230167317